# EUROPEAN PATENT APPLICATION

(11) **EP 2 759 388 A1**
(43) Date of publication of application: **30.07.2014**
(21) Application number: 12829646.4
(22) Date of filing: 30.08.2012
(51) Int. Cl.: B29C 33/38, B29C 45/26

(54) **MOLD**

(30) Priority: 05.09.2011 JP 2011193355
(71) Applicant: Polyplastics Co., Ltd., Tokyo 108-8280 (JP)
(72) Inventor: MIYASHITA, Takayuki, Shizuoka 416-8533 (JP); HIROTA, Shinichi, Shizuoka 416-8533 (JP)
(74) Representative: Maiwald Patentanwalts GmbH
(86) International application number: PCT/JP2012/072039
(87) International publication number: WO 2013/035625

(57) **Abstract**

Provided is a technology for solving the drawback such as chipping of a heat-insulating layer which is caused by the contact of a heat-insulating layer formed on a first mold with a second mold at the mold parting surface. A mold divided into two or more is provided in which a heat-insulating layer is formed on a substantially entire surface of an inner wall surface of the mold, and the heat-insulating layer does not exist on a mold parting surface. For example, the mold is provided with a first mold occupying a majority of a cavity and a second mold which forms at least a part of the cavity together with the first mold, in which the first mold is provided with a flange part, and a part of a surface of the flange part constitutes a part of the mold parting surface.

## Description

### TECHNICAL FIELD

The present invention relates to a mold having a heat-insulating layer formed therein.

### BACKGROUND ART

A thermoplastic resin has been used in various fields such as electrical components and electronic components used for a car and the like; office equipment; containers for food and drink; and the like since it weighs less than other materials such as metal, and can be easily molded into desired forms by the injection-molding method and the like.

In a case in which a mold is filled with a molten thermoplastic resin as in the injection-molding method to obtain a resin molded article in a desired shape, a pattern and shape to be formed in the resin molded article are formed on a cavity surface of the mold.

In order to improve transferability of the pattern and shape on the cavity surface to the resin molded article, methods have been known such as those in which improvement is made in a thermoplastic resin, those in which a specific additive is added to a thermoplastic resin, and those in which a mold temperature is increased.

In particular, a method in which a mold temperature is increased is effective in that improvement of materials is not required. However, when a mold temperature is increased, more time is required for cooling and solidifying a plasticized thermoplastic resin, which generally decreases the forming efficiency.

In this regard, Patent Literature 1 and others disclose a mold having an inner wall surface coated with a heat-insulating layer having small heat conductivity, i.e., a heat-insulating mold.

In addition to the improvement of transferability as described above, the heat-insulating mold described above in Patent Literature 1 and others is also suitable for a case in which a mold temperature needs to be increased (for example, a case in which moldability or the like is improved).
[Patent Document 1] Japanese Unexamined Patent Application, Publication No. H09-155876

### DISCLOSURE OF THE INVENTION

### Problems to be Solved by the Invention

In the meantime, for example, in the case where a mold is constituted of a first mold and a second mold and a heat-insulating layer is formed on an inner wall surface of the first mold and on an inner wall surface of the second mold, a problem such as chipping of the heat-insulating layer can occur when the heat-insulating layer formed on the first mold is brought into contact with the second mold at the mold parting surface.

The present invention was accomplished in order to solve the above-described problem, and an object thereof is to provide a technology for solving the drawback such as chipping of a heat-insulating layer which is caused by the contact of a heat-insulating layer formed on a first mold with a second mold at the mold parting surface.

### Means for Solving the Problems

The present inventors have conducted extensive studies to solve the above problem. As a result, the present inventors found that it is possible to solve the above-described problem with a mold divided into two or more, comprising a heat-insulating layer formed on a substantially entire surface of an inner wall surface, wherein the heat-insulating layer does not exist on a mold parting surface. Then the present inventors have completed the present invention. More specifically, the present invention provides the following.
(1) A mold divided into two or more, comprising a heat-insulating layer formed on a substantially entire surface of an inner wall surface of the mold, wherein the heat-insulating layer does not exist on a mold parting surface.
(2) The mold according to (1), comprising a first mold which occupies a majority of a cavity and a second mold which forms at least a part of the cavity together with the first mold, wherein the first mold comprises a flange part, and a part of a surface of the flange part constitutes a part of the mold parting surface.
(3) The mold according to (2), wherein a top surface is formed on a top part of the flange part, the top surface constitutes a part of the cavity, and a width of the top surface in a perpendicular direction with respect to a borderline between the second mold and the flange part is 0.1 mm or more and 0.2 mm or less.
(4) The mold according to (2) or (3), wherein the flange part comprises a sloped surface formed from a bottom of the flange part on an inner wall surface side of the first mold to the top part of the flange part, and the heat-insulating layer is a heat-insulating layer formed by a spraying method.
(5) The mold according to (3), wherein the flange part comprises a perpendicular surface extending from the top surface to the inner wall surface side of the first mold perpendicularly to the top surface, and a sloped surface formed in a direction to a lower end of the perpendicular surface from the bottom of the flange part on the inner wall surface side of the first mold when a line of intersection between the top surface and the perpendicular surface is taken as an upper end of the perpendicular surface, and the heat-insulating layer is a heat-insulating layer formed by a spraying method.
(6) The mold according to (4) or (5), wherein an angle between an extended surface of the sloped surface and a parting surface between the first mold and the second mold is 45° or more.

### Effects of the Invention

According to the present invention, since the heat-insulating layer formed on the first mold does not contact with the second mold at the mold parting surface, the problem such as chipping of the heat-insulating layer is difficult to occur.

### BRIEF DESCRIPTION OF THE DRAWINGS

FIG. 1 shows an exploded perspective view schematically illustrating a mold of an embodiment.
FIG. 2 shows diagrams schematically illustrating a first mold of an embodiment, wherein FIG. 2A is a cross-sectional view illustrating the MM cross section of the first mold, and FIG. 2B is an enlarged view of a flange part of the first mold.
FIG. 3 shows enlarged views of the flange part in the case where a top surface is formed on a top part of the flange part, wherein FIG. 3A is an enlarged view of the flange part when a sloped surface is formed in a direction to an inner wall surface of the first mold from the top surface, and FIG. 3B is an enlarged view of the flange part in the case where a perpendicular surface extending from the top surface to the inner wall surface side of the first mold perpendicularly to the top surface further intervenes between the top surface and the sloped surface.
FIG. 4 shows a cross-sectional view schematically illustrating a second mold of an embodiment.
FIG. 5 shows diagrams schematically illustrating one example of a method for manufacturing the mold of an embodiment.
FIG. 6 shows a cross-sectional view schematically illustrating a variation example of a second mold body.
FIG. 7 shows a cross-sectional view schematically illustrating a variation example of a first mold body.

### EXPLANATION OF REFERENCE NUMERALS

1: mold
10, 10A, 10B: first mold
101, 101A, 101B: first mold body
102, 102A: flange part
103, 103A: heat-insulating layer
20, 20A: second mold
201, 201A: second mold body
202, 202A: second heat-insulating layer
203A: second flange part

### PREFERRED MODE FOR CARRYING OUT THE INVENTION

Hereinafter, embodiments of the present invention will be described. It should be understood that the present invention is not limited to the following embodiments.

### Mold

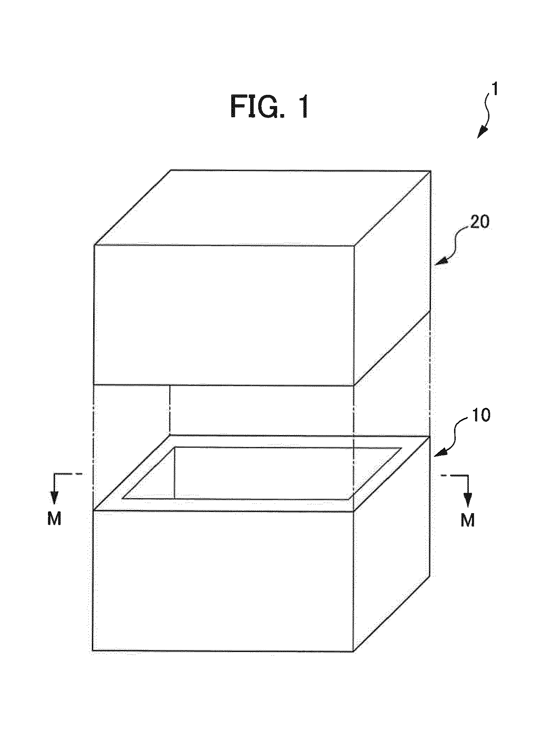

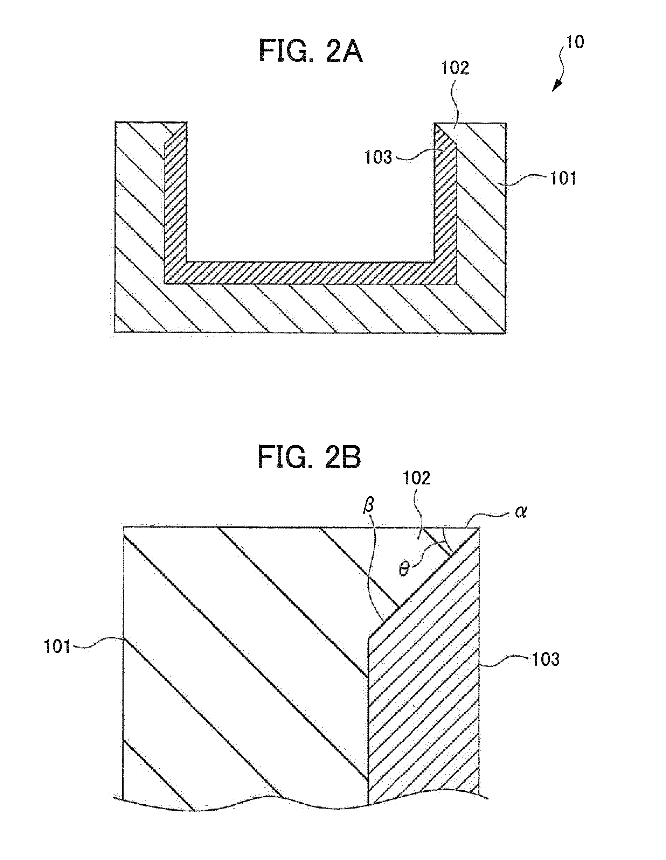

FIG. 1 shows an exploded perspective view schematically illustrating a mold of the present embodiment. FIG. 2 shows diagrams schematically illustrating a first mold, wherein FIG. 2A is a cross-sectional view illustrating the MM cross section of the first mold, and FIG. 2B is an enlarged view of a flange part of the first mold.

As shown in FIG. 1, a mold 1 of the present embodiment comprises a first mold 10 and a second mold 20. In the present embodiment, the first mold 10 and the second mold 20 form a cavity. Note that the cavity refers to the entire space in the inside of the mold to be filled with resin.

As shown in FIG. 2, the first mold 10 comprises a first mold body 101, a flange part 102 formed on a rim at an inner wall side of the first mold body 101, and a heat-insulating layer 103 formed on a substantially entire surface of an inner wall surface of the first mold body 101. The term "substantially entire surface" includes an entire surface.

The first mold body 101 forms an outer shape in the form of a concave shape. The concave shape forms a space to serve as the cavity. The concave shape may be any shape insofar as the shape is a recess, and a shape of the inner part of the recess is not particularly limited. Therefore, the concave shape includes a bowl-like recess, a V-shaped recess, and a recess having a complicated shape in addition to the rectangular recess illustrated in the drawing. In the present invention, a surface of the heat-insulating layer 103 described later serves as a cavity surface, and a desired shape of a molded article may be formed with the heat-insulating layer 103 when forming the heat-insulating layer 103, but it is preferable to shape the inner part of the recess to the one which is to be imparted to the desired molded article.

The flange part 102 is a part extending from a rim of the recess of the first mold body 101 and is a part of the recess.

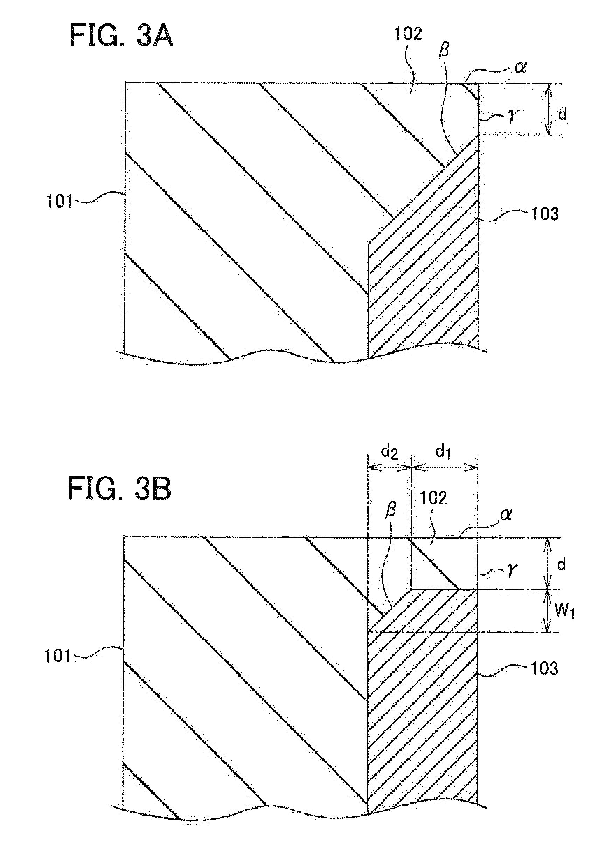

As shown in FIG. 2B, the flange part 102 has a surface constituting a part of a mold parting surface between the first mold 10 and the second mold 20 and a sloped surface which extends downward from the top part of the flange part 102 to the inside of the recess. A surface α of the first mold 10, which is brought into contact with the second mold 20, is capable of contacting with the second mold without any gap. Also, as shown in FIG. 2B, a sloped surface β (hereinafter sometimes referred to as "lateral surface β") on a surface of the flange part 102 serves as a sloped surface which extends upward from the bottom of the flange part 102 in a direction to the top part of the flange part. Further, unlike the present embodiment shown in FIG. 2, the top part of the flange part 102 may be a top surface γ shown in FIG. 3A. Further, in addition to the feature that the top part of the flange part 102 is the top surface γ as shown in FIG. 3B, a perpendicular surface extending from the top surface γ to an inner wall surface side of the first mold perpendicularly to the top surface γ may intervene between the sloped surface P and the top surface γ. In these cases, the top surface γ constitutes a part of the cavity surface. In the case where the top part is the top surface γ, a width of the top surface in a perpendicular direction with respect to a borderline between the second mold 20 and the flange part 102 on the cavity surface is preferably 0.1 mm or more and 0.2 mm or less. Further, in the case where the heat-insulating layer 103 is formed by the spraying method, a height d₁ of a perpendicular surface, a dimension d₂ of a projection of the sloped surface P in a height direction, and a dimension w₁ of a projection of the sloped surface P in a direction of the top surface γ in FIG. 3B preferably satisfy d2≤w1, and it is preferable that d1/d2≥1 is also satisfied because these facilitate the formation of the heat-insulating layer 103.

An angle θ between the sloped surface (or an extended surface of the sloped surface) and the mold parting surface (the contact surface between the first mold 10 and the second mold 20) may preferably be 45° or more.

The inner wall surface is a surface which is a combination of the sloped surface P on the surface of the flange part 102 and a metal surface existing inside the bottom of the flange part 102 on the surface of the inner part of the recess. The surface of the heat-insulating layer 103 formed on the inner wall surface serves as the surface of the cavity. Since the recess which is the space defined by the concave shape is for the purpose of forming a space to serve as the cavity, the shape of the inner wall surface is not limited to the simple one shown in FIG. 2 and may be the one which is adapted to the shape of a desired molded article, for example. The surface of the heat-insulating layer 103 described later is the cavity surface in the present invention, but, in the case where it is difficult to achieve a desired shape by subjecting the surface of the heat-insulating layer 103 to processing such as shaving or the like, the method for forming the shape of the inner wall surface in the concave part of the mold body into the one which is transferred onto the surface of the molded article and forming the heat-insulating layer on the thus-formed inner wall surface is effective.

The heat-insulating layer 103 is arranged on the inner wall surface of the first mold body 101. In order that the effect of the heat-insulating layer 103 is uniformly exhibited, the heat-insulating layer 103 is preferably provided on an entire surface of the inner wall surface.

There is no particular limitation on the thickness of the heat-insulating layer 103, but it is appropriately selected in view of the heat-insulating effect and the like of a material which constitutes the heat-insulating layer 103. Further, the thickness of the heat-insulating layer 103 may not be constant. Moreover, according to this embodiment, the heat-insulating layer 103 forms the cavity surface as described above.

The thermal conductivity required for the heat-insulating layer 103 is particularly preferred to be 2 W/m·K or less although it may differ depending on applications and the like.

There is no particular limitation on the material which constitutes the heat-insulating layer 103 as long as it has low thermal conductivity and thermal resistance good enough not to produce a fault even when contacted with a hot resin composition.

Examples of the material which satisfies the thermal resistance and thermal conductivity required for the heat-insulating layer 103 can include resins having low thermal conductivity and high thermal resistance such as a polyimide resin, and porous ceramics such as porous zirconia. Hereinafter, these materials will be described.

Specific examples of the polyimide resin include pyromellitic acid (PMDA) based polyimide, biphenyltetracarboxylic acid based polyimide, polyamidoimide in which trimellitic acid is used, bismaleimide based resin (bismaleimide/triazine based and the like), benzophenonetetracarboxylic acid based polyimide, acetyleneterminated polyimide, and thermoplastic polyimide. Note that a heat-insulating layer constituted of a polyimide resin is particularly preferred. Preferred materials other than polyimide resins include a tetrafluoroethylene resin and the like. Further, the heat-insulating layer may contain a resin other than a polyimide resin and a tetrafluoroethylene resin, an additive and the like in a range where the effect of the present invention is not compromised.

Zirconia contained in porous zirconia is not particularly limited, and may be any of stabilized zirconia, partially stabilized zirconia and unstabilized zirconia. Stabilized zirconia, which is zirconia in which cubic zirconia is stabilized even at room temperature, is excellent in mechanical properties such as strength and toughness and wear resistance. Partially stabilized zirconia, which refers to a state in which tetragonal zirconia partially remains even at room temperature, undergoes martensitic transformation from the tetragonal system to the monoclinic system, inhibits growth of cracks spread due to tensile stress in particular, and has high rupture toughness. Unstabilized zirconia refers to zirconia which is not stabilized by a stabilizer. At least two selected from stabilized zirconia, partially stabilized zirconia, and unstabilized zirconia may be used in combination.

As a stabilizer contained in stabilized zirconia and partially stabilized zirconia, a conventionally known stabilizer can be employed. Examples thereof include yttria, ceria and magnesia. The amount of the stabilizer used is not particularly limited, and can be appropriately set according to the use, the material to be used, and the like.

Note that porous ceramics other than porous zirconia can also be used, but porous zirconia has higher durability as compared with other porous ceramics. For this reason, when the mold having the heat-insulating layer 103 constituted of porous zirconia formed therein is used, faults such as deformation of the heat-insulating layer 103 do not easily occur. Therefore, more molded articles can be continuously molded, leading to the significantly increased productivity of molded articles.

A raw material to form the heat-insulating layer 103 may further contain conventionally known additives and the like in addition to the above-described zirconia and stabilizer within a range of not hindering the effect of the present invention.

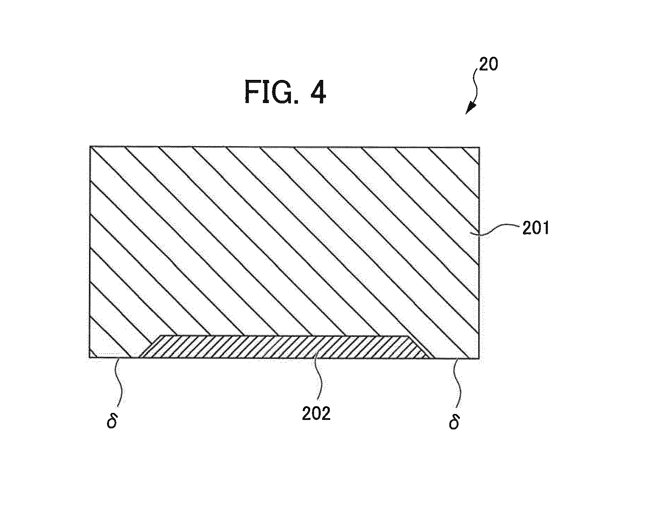

Hereinafter, the second mold 20 will be described. FIG. 4 shows a diagram schematically illustrating a cross section of the second mold 20. The second mold 20 comprises a second mold body 201 and a second heat-insulating layer 202. In the case of such a second mold 20, the majority of a cavity exists on the side of the first mold 10.

The second mold body 201 has a recess for arranging the second heat-insulating layer 202. Also, as described above, a contact surface δ of the second mold body, which is brought into contact with the first mold body 101, contacts with the lateral surface α of the flange part 102 of the first mold body 101 without any gap.

The second heat-insulating layer 202 is arranged on a recess of the second mold body 201. Specific description of the second heat-insulating layer is not given since the contents are the same of those of the heat-insulating layer 103.

In the second mold body 201 shown in FIG. 4, the recess in which the second heat-insulating layer 202 is arranged is a space defined by a sloped surface extending downward from the contact surface δ to the bottom surface of the recess, a bottom surface enclosed by a lower end of the sloped surface when a line of intersection between the contact surface δ and the sloped surface is taken as an upper end of the sloped surface, and an extended surface of the contact surface δ. A perpendicular surface extending from the contact surface δ to the bottom surface perpendicularly to the contact surface δ may intervene between the sloped surface and the extended surface of the contact surface δ.

### Method for Manufacturing Mold

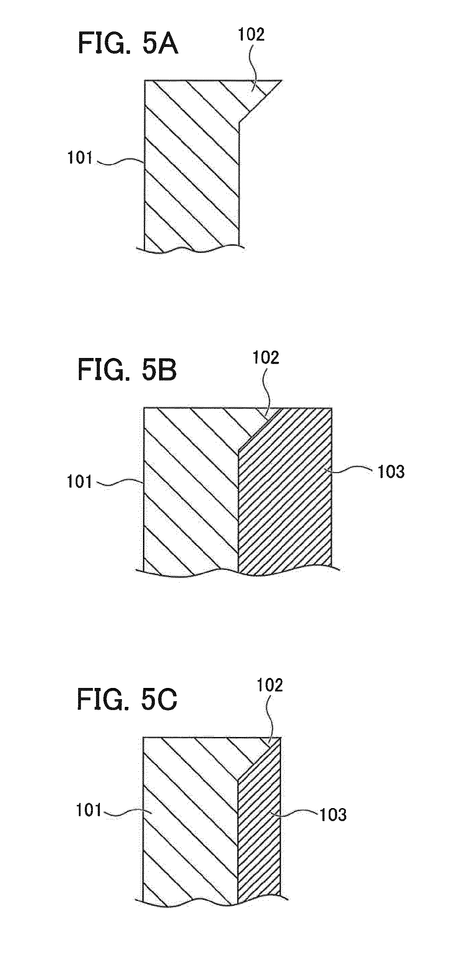

A method for manufacturing the mold of the present invention is not particularly limited. The method for manufacturing the mold will be described by taking a method for manufacturing the mold of the present embodiment as an example. FIG. 5 shows diagrams schematically illustrating one example of the manufacturing method of the present embodiment.

A first step is a step for bringing the state of FIG. 5A into the state of FIG. 5B. The first step is the step for preparing the first mold body 101 having the recess having a concave outer shape and the flange part 102 extending from the rim of the recess and forming the heat-insulating layer 103 on the inner wall surface of the first mold body 101 (shown in FIG. 5 are the enlarged views of the vicinity of the flange part 102). It is possible to produce the first mold body 101 by a known casting method or the like.

A method for forming the heat-insulating layer 103 is not particularly limited, and it is possible to appropriately employ a suitable method depending on the type and the like of the material constituting the heat-insulating layer 103. Hereinafter, the method for forming the heat-insulating layer 103 will be described by giving a specific example thereof.

In a case where the material which constitutes the heat-insulating layer 103 is a resin having high thermal resistance and low thermal conductivity such as a polyimide resin, the following methods may be used: a method for forming a heat-insulating layer 103 of polyimide film and the like, the method comprising: applying a solution of a polymer precursor capable of forming a polymeric heat-insulating layer such as a polyimide precursor to the inner wall surface of the concave part of the first mold body 101, applying heat to evaporate a solvent and further applying heat for polymerization; a method in which a monomer of a thermally stable polymer, for example, pyromellitic acid anhydride and the 4,4-diaminodiphenyl ether is vapor deposited and polymerized; or in the case of a planar mold, a method for forming the heat-insulating layer 103, the method comprising attaching a polymeric heat-insulating film on the inner wall surface of the first mold body 101 using an appropriate adhesion method or a polymeric insulating film in a form of an adhesive tape. In addition, a polyimide film may be formed, and then on that surface, a chromium (Cr) film or a titanium nitride (TiN) film as a metal based hard film may be further formed.

Further, in a case where a material which constitutes the heat-insulating layer 103 is porous ceramics such as porous zirconia, the spraying method is preferably used. By employing the spraying method, the thermal conductivity of porous zirconia and the like is easily adjusted to fall within a desired range. In addition, there is not a problem that the mechanical strength of the heat-insulating layer 103 is considerably decreased due to formation of excessive bubbles in the inner part of porous zirconia and the like. By forming the heat-insulating layer 103 by spraying as described above, the structure of the heat-insulating layer 103 becomes suitable for the use of the present invention.

For example, formation of the heat-insulating layer 103 by spraying can be performed in the following manner. First, a raw material is melted into a liquid. The liquid is accelerated to collide against the inner wall surface of the first mold body 101. Lastly, the raw material, which collides thereagainst and is deposited thereon, is solidified. In this way, a very thin heat-insulating layer 103 is formed on the inner surface of a mold. By further causing a molten raw material to collide onto the very thin heat-insulating layer 103 and to be solidified, the thickness of the heat-insulating layer 103 can be adjusted. For the method for solidifying a raw material, conventionally known cooling means may be used, or the raw material may be merely left standing and thereby solidified. The spraying method is not particularly limited, and a preferred method can be appropriately selected from arc spraying, plasma spraying, flame spraying and the like.

In the case of forming the heat-insulating layer 103 by the spraying method, it is preferable to use the first mold body 101 as shown in FIG. 2. In the first mold body 101 shown in FIG. 2, an angle θ existing in the flange part of the first mold body 101 on which the heat-insulating layer 103 is formed is 45° or more.

A second step is a step for bringing the state of FIG. 5B into the state of FIG. 5C. As shown in FIG. 5, a part of the heat-insulating layer 103 is removed in the second step in a thickness direction of the heat-insulating layer 103. In this step, the heat-insulating layer 103 is removed until the removal reaches the position of the top part of the flange part 102. Further, after the removal reaches the top part of the flange part 102, the heat-insulating layer 103 and a part of the flange part 102 are removed in a depth direction of the heat-insulating layer 103, so that the flange part 102 having the top surface at the top part as shown in FIG. 3A is obtained. The size of the top surface is increased along with an increase in the depth of the removal. Also, in FIG. 5, by replacing the flange part 102 with the flange part 102 of FIG. 3B, and by removing a part of the heat-insulating layer 103 until the removal reaches the top surface γ, the flange part 102 having the top surface at the top part as shown in FIG. 3B and having the perpendicular surface which is perpendicular to the top surface is obtained.

A method for removing the heat-insulating layer 103 and the flange part 102 is not particularly limited, and it is preferable to remove them in such a manner that they are gradually shaved by a method for polishing them with a diamond paste or the like.

### Effects

The mold of the present embodiment has the following effects.

Since the mold 1 of the present embodiment has the flange part 102 at the rim of the recess of the first mold 10 as shown in FIG. 1 to FIG. 4, the heat-insulating layer 103 of the first mold 10 and the second mold body 201 of the second mold 20 are not brought into contact with each other. As a result, the problem such as chipping of the heat-insulating layer 103, which can be caused by the contact of the heat-insulating layer 103 with the second mold body 201 when the molds are clamped, difficult to occur. Further, since the position of the flange part 102 is at the rim of the recess, it is possible to form the heat-insulating layer 103 on the substantially entire surface of the inner wall surface, and the drawback which can be caused by a partial lack of the heat-insulating layer 103 hardly occurs.

Furthermore, the lateral surface β of the flange part 102 in the mold 1 of the present embodiment is the sloped surface. In the case of forming the heat-insulating layer by the spraying method, it is easy to form the heat-insulating layer 103 when the lateral surface is the sloped surface as described above. As shown in FIG. 2B, when the angle θ between the sloped surface of the lateral surface β and the lateral surface α is 45° or more, it is particularly easy to form the heat-insulating layer 103. On the other hand, along with an increase in the inclination of the lateral surface P, the formation of the heat-insulating layer 103 by the spraying method becomes difficult. Further, by forming the heat-insulating layer 103 on the sloped surface β, it is easy to form the heat-insulating layer 103 on the substantially entire part of the inner wall surface and simultaneously preventing the heat-insulating layer 103 from being formed on the parting surface between the first mold 10 and the second mold 20.

Furthermore, the top part of the flange part 102 of the first mold body 101 in the mold 1 of the present embodiment is not planar as shown in FIG. 2, but the top surface γ shown in FIG. 3A may be formed thereon. In this case, since it is unnecessary in the second step for removing the heat-insulating layer 103 to stop the removal of the heat-insulating layer 103 at the top part of the flange part 102 and to leave the top part intact, there is the advantage of not requiring high accuracy in the manufacture. For example, when the width d of the top surface γ shown in FIG. 3 is 0.1 mm or more, the manufacture of the mold is facilitated.

However, it is difficult to attain the heat-insulating effect of the heat-insulating layer 103 on the part of contact with the top surface γ in the thermoplastic resin composition in a molten state when it is flown into the mold at the time of the manufacture of a molded article. Here, when the width d of the top surface shown in FIG. 3 is 0.2 mm or less, it is possible to suppress the above-described problem which can be caused by the partial lack of the heat-insulating layer 103.

Further, as shown in FIG. 3B, the perpendicular surface may be formed between the sloped surface P and the top surface γ in addition to the formation of the top surface γ. In this case, when the removal of the heat-insulating layer 103 is further continued after the removal reaches the top surface γ in the second step of removing the heat-insulating layer 103, the width d of the top surface is maintained constant for a while. Therefore, even when the heat-insulating layer 103 is removed too much, there is no risk of immediate change of the width or the area of the region where the heat-insulating layer 103 is formed. Further, since it is possible to decide the width d at the stage of designing the mold, there is no risk of enlargement of the region where the heat-insulating layer is not formed (region where the heat insulation is disabled) even when the heat-insulating layer 103 is removed too much.

Furthermore, in the flange part 102 of FIG. 3B, in addition to the formation of the sloped surface β, the perpendicular surface is formed between the sloped surface β and the top surface γ. Therefore, the portion where the thickness of the heat-insulating layer 103 is thinned is reduced as compared to the case of FIG. 3A. Consequently, in the mold having the flange part 102 of FIG. 3B, it is possible to ensure the higher heat-insulating effect at the portion which is close to the top surface γ and which contacts with the surface of the heat-insulating layer 103.

When the recess in which the second insulating layer 202 is arranged in the second mold body 201 shown in FIG. 4 has the perpendicular surface between the sloped surface and the extended surface of the contact surface δ as described above, the part where the thickness of the second heat-insulating layer 202 is thinned is reduced as compared to the case of not having the perpendicular surface, thereby enabling to ensure the higher heat-insulating effect.

It is possible to manufacture the second mold 20 shown in FIG. 4 according to the manufacturing method shown in FIG. 5. In other words, it is possible to employ the method for forming the second heat-insulating layer 202 on the inner wall surface of the second mold body 201 and then removing a part of the second heat-insulating layer 202 until the contact surface δ appears. Here, when the perpendicular surface intervenes between the sloped surface and the extended surface of the contact surface δ as described above, there is no risk of immediate change of the width or the area of the region where the second heat-insulating layer 202 is formed even when the second heat-insulating layer 202 is removed too much. The exterior angle between the sloped surface and the contact surface δ is preferably 45° or less when the second heat-insulating layer 202 is formed by the spraying method because the formation is facilitated.

The preferred embodiments of the mold according to the present invention are described above, but the present invention is not limited to the aforementioned embodiments, but can be performed in various forms.

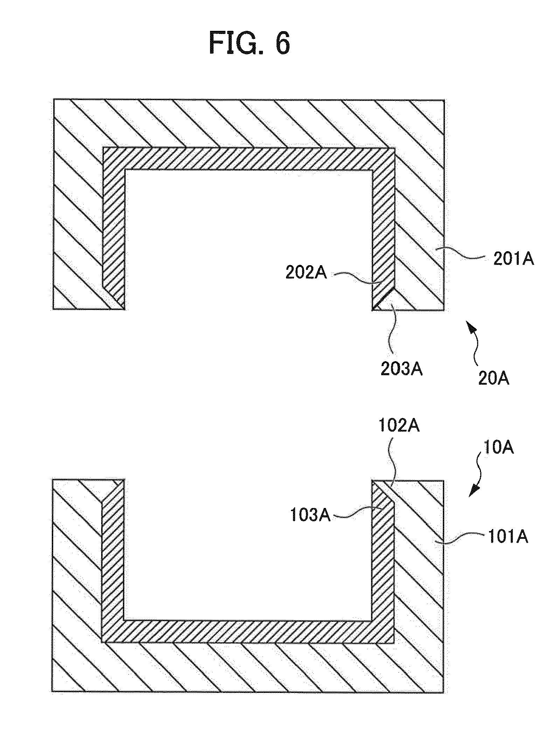

For examples, while the surface of the second heat-insulating layer 202 and the surface δ in the second mold body 201 are on an identical plane in the second mold 20 in the above-described embodiment, a second mold 20A may have a concave outer shape as is the case with a first mold 10A as shown in FIG. 6. In this case, in order to avoid the contact of a second heat-insulating layer 202A formed on the second mold 20A with a first mold body 101A, it is preferable to prevent the contact of the second heat-insulating layer 202A with the first mold 10A by providing a second flange part 203A also in the second mold 20A for the same purpose as that for a flange part 102A.

Here, in the first mold body 101A, the shape of a vicinity of the flange part 102A may be the one having a top surface as shown in FIG. 3A or the one having a top surface and a perpendicular surface as shown in FIG. 3B. Also in the second mold body 201A, the shape of a vicinity of the second flange part 203A may be the one having a top surface as shown in FIG. 3A or the one having a top surface and a perpendicular surface as shown in FIG. 3B except that the shape is upside down. The effects to be attained by the preferred angle between the top surface and the sloped surface and the above-described shape are the same as those described for FIG. 3A or FIG. 3B.

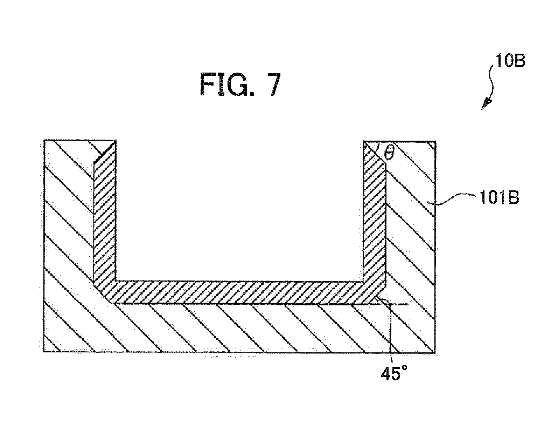

Further, the bottom of the concaved inner wall surface of the first mold 10 in the above-described embodiment has a bent portion having an angle of 90° as shown in FIG. 2A, but it may be gently sloped as shown in FIG. 7. As shown in FIG. 7, an angle at the bottom of the first mold body 101B is preferably adjusted to 45° or less, because this allows the heat-insulating layer 103B to be easily formed by the spraying method.

Here, in the first mold body 101B, the shape of a vicinity of the flange part may be the one having a top surface as shown in FIG. 3A or the one having a top surface and a perpendicular surface as shown in FIG. 3B. The effects to be attained by the preferred angle between the top surface and the sloped surface and the above-described shape are the same as those described about FIG. 3A or FIG. 3B.

Regarding the mold in the above-described embodiment, the mold 1 constituted of the first mold 10 and the second mold 20 is described, but the number of the molds in the mold 1 may be 3 or more. In this case, when a heat-insulating layer of a predetermined one of the molds contacts with the adjacent mold, a flange part may be provided on a rim of a recess of the predetermined mold.

## Claims

1. A mold divided into two or more, comprising
a heat-insulating layer formed on a substantially entire surface of an inner wall surface of the mold,
wherein the heat-insulating layer does not exist on a mold parting surface.

2. The mold according to claim 1, comprising a first mold which occupies a majority of a cavity and a second mold which forms at least a part of the cavity together with the first mold,
wherein the first mold comprises a flange part, and
a part of a surface of the flange part constitutes a part of the mold parting surface.

3. The mold according to claim 2, wherein a top surface is formed on a top part of the flange part, the top surface constitutes a part of the cavity, and
a width of the top surface in a perpendicular direction with respect to a borderline between the second mold and the flange part is 0.1 mm or more and 0.2 mm or less.

4. The mold according to claim 2 or 3, wherein the flange part comprises a sloped surface formed from a bottom of the flange part on an inner wall surface side of the first mold to the top part of the flange part, and
the heat-insulating layer is a heat-insulating layer formed by a spraying method.

5. The mold according to claim 3, wherein the flange part comprises a perpendicular surface extending from the top surface to the inner wall surface side of the first mold perpendicularly to the top surface, and a sloped surface formed in a direction to a lower end of the perpendicular surface from the bottom of the flange part on the inner wall surface side of the first mold when a line of intersection between the top surface and the perpendicular surface is taken as an upper end of the perpendicular surface, and
the heat-insulating layer is a heat-insulating layer formed by a spraying method.

6. The mold according to claim 4 or 5, wherein an angle between an extended surface of the sloped surface and a parting surface between the first mold and the second mold is 45° or more.
